# EUROPEAN PATENT APPLICATION

(11) **EP 3 673 976 A1**
(43) Date of publication of application: **01.07.2020**
(21) Application number: 19219910.7
(22) Date of filing: 27.12.2019
(51) Int. Cl.: B01D 53/32

(54) **SYSTEM AND METHOD FOR ADJUSTING CARBON DIOXIDE AND WATER CONCENTRATIONS IN AN ENVIRONMENT**

(30) Priority: 28.12.2018 US 201816235182
(71) Applicant: Palo Alto Research Center Incorporated, Webster, NY 14580 (US)
(72) Inventor: DESAI, Divyaraj, Sunnyvale, CA 94086 (US); CHINTAPALLI, Mahati, Berkeley, CA 94704 (US); RIVEST, Jessica Louis Baker, Palo Alto, CA 94301 (US); COCKER, Eric, Redwood City, CA 94063 (US)
(74) Representative: Lord, Michael

(57) **Abstract**

A device controls levels of carbon dioxide and water in a controlled environment. The device (10) comprises a first electrode chamber, which receives an input fluid (A) comprising first concentrations of carbon dioxide and water and is configured to deliver a first output fluid (B) having concentrations of carbon dioxide and water lower than the first concentrations to a first environment (12), and a second electrode chamber having an outlet configured to deliver a second output fluid (C) having third concentrations of carbon dioxide and water to a second environment (20). A reduction catalyst layer in the first electrode chamber reduces carbon dioxide and water in the input fluid to form ionic carrier species, an ion-transporting membrane is positioned between the first and second electrode chambers and comprises carrier species, and an oxidation catalyst layer in the second electrode chamber oxidizes the ionic carrier species to form carbon dioxide and water.

## Description

This disclosure relates generally to systems for separating carbon dioxide and water from a gas, methods of operating the same, and an electrochemical pump for use in the systems.

Reduction and removal of carbon dioxide (CO₂) from indoor environments is energy intensive and costly. Currently, CO₂ is typically removed from indoor environments, such as commercial buildings, by frequent ventilation using outdoor air to dilute the CO₂ concentration within the building. On an electricity basis, these processes consume about 400-500 kJ/mol CO₂ for ventilation as well as for energy to modulate the temperature and humidity of the incoming outdoor air. Depending on an area's weather and/or climate, a variable amount of moisture transfer may also be achieved. However, this approach has limited effectiveness in urban areas that form a CO₂ dome or in areas having humid climates, which reduce the ability of the outdoor air to be used for dilution.

Other approaches that involve regenerative CO₂ removal systems using alkali or amine sorbents cannot dehumidify air and have high capital costs that limit their installation in large buildings. Such systems are also relatively non-selective and require energy-intensive regeneration (240-800 kJ/mol, electricity basis), limiting their energy savings potential (e.g., 0.19 quad, primary fuel basis) to large commercial buildings. For example, a commercialized sorbent-based system achieved a reduction of 29% in the cooling load.

Electrochemical approaches to CO₂ and water removal suggest continuous operation and high selectivity in the components removed. However, existing research on quinone-based CO₂ shuttles report CO₂ removal fluxes that are too low to be commercially viable. Such quinone-based approaches use a quinone carrier that has poor oxygen stability and has demonstrated low rates of CO₂ removal. Similar work demonstrated electrochemical CO₂ transport using a 1,4-benzoquinone carrier for electrochemical concentration of CO₂, but that process requires a high reduction potential (e.g., -3 V vs. Ag|AgCl) and cannot operate continuously.

Substantial energy savings may be achieved by reducing the volume of outdoor air that requires conditioning instead of reducing the energy consumed in conditioning (i.e., cleaning and/or modulating temperature) building air. Such approaches can address the immense energy consumption of traditional HVAC systems by a targeted removal of indoor contaminants, thereby saving about 10% of U.S. commercial building HVAC energy. Described herein are systems and processes that reduce both energy consumption and overall costs for selectively removing carbon dioxide and water from indoor environments.

Embodiments described herein are directed to an electrochemical device comprising a first electrode chamber including an inlet which receives an input fluid from a first environment comprising first concentrations of carbon dioxide and water and an outlet configured to deliver a first output fluid comprising second concentrations of carbon dioxide and water to the first environment, where the second concentrations are lower than the first concentrations. A second electrode chamber has an outlet configured to deliver a second output fluid comprising third concentrations of carbon dioxide and water to a second environment. A reduction catalyst layer in the first electrode chamber reduces carbon dioxide and water in the input fluid to form ionic carrier species, an ion-transporting membrane is positioned between the second electrode chamber and the first electrode chamber where the membrane comprises carrier species, and an oxidation catalyst layer in the second electrode chamber oxidizes the ionic carrier species to form carbon dioxide and water.

Other embodiments are directed to a device to control levels of carbon dioxide and water in a controlled environment. The device includes a first electrode chamber including an inlet which receives an input fluid comprising first concentrations of carbon dioxide and water and an outlet configured to deliver a first output fluid comprising second concentrations of carbon dioxide and water to a first environment, where the second concentrations are lower than the first concentrations. A second electrode chamber has an outlet configured to deliver a second output fluid comprising third concentrations of carbon dioxide and water to a second environment. A reduction catalyst layer in the first electrode chamber reduces carbon dioxide and water in the input fluid to form ionic carrier species, an ion-transporting membrane is positioned between the second electrode chamber and the first electrode chamber and comprises carrier species, and an oxidation catalyst layer in the second electrode chamber oxidizes the ionic carrier species to form carbon dioxide and water.

Further embodiments are directed to a method for controlling carbon dioxide and water concentrations in a controlled environment. The method includes providing an electrochemical device which comprises a first electrode chamber including an inlet which receives an input fluid comprising first concentrations of carbon dioxide and water and an outlet configured to deliver a first output fluid comprising second concentrations of carbon dioxide and water, where the second concentrations are lower than the first concentrations. A second electrode chamber has an outlet configured to deliver a second output fluid comprising third concentrations of carbon dioxide and water. A reduction catalyst layer in the first electrode chamber is configured to reduce carbon dioxide and water in the input fluid to form ionic carrier species, and an ion-transporting membrane is positioned between the first and second electrode chambers and comprises carrier species. An oxidation catalyst layer in the second electrode chamber is configured to oxidize the ionic carrier species to form carbon dioxide and water, and an energy source is electrically connected with at least one of the reduction catalyst layer and the oxidation catalyst layer. The method further includes electrochemically reducing carbon dioxide and water to ionic carrier species in the first electrode chamber, ionically transporting the ionic carrier species through the membrane, and electrochemically oxidizing the ionic carrier species to carbon dioxide and water in the second electrode chamber. One of the first and second output fluids is directed into the controlled environment.
FIG. 1 is a side sectional view of an environment in which a selective electrochemical device operates in accordance with certain embodiments;
FIG. 2 is a schematic diagram of a selective electrochemical device in accordance with certain embodiments;
FIG. 3 is a side sectional view of a selective electrochemical device in accordance with certain embodiments;
FIG. 4 is a perspective view of a selective electrochemical device including a stack of electrochemical cells in accordance with certain embodiments;
FIG. 5 is an exploded perspective view of the stack of electrochemical cells of Fig. 4;
FIG. 6 illustrates layers of a selective electrochemical device in accordance with certain embodiments;
FIG. 7 is a side sectional view of a selective electrochemical device for concentrating carbon dioxide and water in an environment in accordance with certain embodiments;
FIG. 8 is a flow diagram of a method in accordance with certain embodiments;
FIG. 9 is a schematic diagram of an experimental system including a selective electrochemical device in accordance with certain embodiments;
FIG. 10 is a graph showing area-specific series resistance for various membranes used in a selective electrochemical device;
FIG. 11 is a graph illustrating the effect of cycling and varying inlet carbon dioxide concentration on area-specific series resistance;
FIG. 12 is a plot of feed and outlet carbon dioxide concentrations during operation of a selective electrochemical device; and
FIG. 13 is a graph showing changes in humidity during operation of a selective electrochemical device.

In the absence of intelligent CO₂ removal systems, a significant amount of energy waste occurs due to excessive ventilation to dilute indoor air to acceptable CO₂ (e.g., <1,000 ppm) and humidity levels (e.g., 30-50% RH). The BTO Scout calculator (2030) predicts significant energy consumption for treating outside air in commercial buildings, distributed between heating (1.34 quad), cooling (-0.14 quad), and ventilation (1.25 quad). However, ASHRAE-mandated ventilation rates allow local building CO₂ concentration to be maintained as high as 2,500 ppm. Given that emerging research points to the benefits of even more stringent air quality standards (e.g., <500 ppm CO₂) for occupant productivity and cognitive function, there is an incentive for technologies that support a tighter building envelope and improve indoor air quality with a lower system cost.

Embodiments described herein are directed to allowing for the targeted removal of indoor humidity and carbon dioxide. In modeled scenarios, adequate indoor air quality can be maintained despite an 80% reduction in the outdoor air ventilation rate. The reduced ventilation rate would result in an annual primary energy savings of >0.50 quads (e.g., 10% of all U.S. commercial building HVAC energy) when implemented across all the commercial buildings in the United States.

In the modeled scenario of a tighter sealing of the building envelope, building occupants are the primary source of humidity. While the targeted CO₂ removal (2,500 ppm → 200 ppm) corresponds to a nominally low humidity change (10% RH at 20 °C), in reality it corresponds to about half of the latent cooling load (0.8 kg/day). This reduction in the latent cooling load enables a substantial downsizing of the heating ventilation and air conditioning (HVAC) cooling capacity. The cost estimate for the installation of a commercially mature system would be about $2/m² installed building area including balance of plant costs, with a simple payback period of less than two years based on current energy prices. Thus, it would be an economically feasible retrofit to existing HVAC systems. When integrated with HVAC systems in newer building, the proposed electrochemical devices could potentially result in lower installation and operating costs for HVAC due to the use of smaller air flow rates and reduced power consumption.

The present disclosure is generally related to electrochemical selective separation of carbon dioxide and water vapor from an input fluid, such as a gas stream. Herein, the term fluid broadly refers to both liquid and gas states. Removal of CO₂ from indoor gas environments is currently accomplished using outdoor air dilution and/or sorbents, and both techniques are energy-intensive. Instead, a modular solid-state electrochemical pump can be used to remove both carbon dioxide and water vapor together in a single electrochemical process. The process reaction is written as: CO₂ + H₂O + 2e⁻ ↔ [HCOO]⁻ + [OH]⁻. The reaction is stimulated by catalysts to selectively capture indoor CO₂ and H₂O as well as by non-aqueous membranes to achieve high removal flux. The catalysts reduce the CO₂ to a carboxylic acid and the membranes ensure rapid ionic transport as formate and hydroxide ions. The electrochemical pump can perform with high faradaic efficiencies for reduction (e.g., >85%) and oxidation (e.g., >95%) reactions as well as with a high contaminant (i.e., CO₂ and H₂O) removal efficiency (e.g., 90%). For example, air-stable, high surface area, p-block metals (e.g., Sn, In) are used as heterogeneous catalysts for CO₂ reduction and rapid ionic transport in an aqueous anion-selective membrane.

Various embodiments are directed to systems and methods for regulating carbon dioxide and water vapor (also referred to as water herein) concentrations of a gaseous environment, which can be predominantly air, in an enclosed space. In certain embodiments, an apparatus is described for carbon dioxide and water removal from a gaseous environment in an indoor space. In other embodiments, an apparatus is described for carbon dioxide and water addition to a gaseous environment in an indoor space. Example embodiments may be directed to contaminant removal in the air conditioning of indoor air, direct air capture of CO₂ from process gas streams, and maintaining adequate CO₂ and humidity levels in greenhouses or solariums. The devices and methods described herein can provide continuous CO₂ removal/addition from/to a gaseous environment, such as indoor air.

A system for electrolytic CO₂ and water removal (ECWR) includes an electrochemical device (e.g., a pump) for continuous indoor air purification. The electrochemical device can be a low-power and a low-temperature device, with a form factor that allows for easy installations in a variety of environments. It can allow for increased building-occupant productivity at a fraction of the energy that would be required for increasing ventilation and associated thermal conditioning of fresh air. The CO₂ and water electrochemical device may be coupled with one or more of: a refrigeration unit, a particulate filter, a sorbent for removing volatile organic contaminants (VOCs), an active carbon sorbent, a dehumidifying unit, or an HVAC unit to provide temperature control, to remove particulate and VOC contaminants, and/or to remove excess water vapor. The CO₂ and water electrochemical device may be used to remove CO₂ and water from indoor air and control the respective concentrations to a safe level of about 1,000 ppm CO₂, or less and a humidity of about 30-65%. The use of the CO₂ electrochemical device decreases air recirculation in a building, thereby decreasing the overall energy consumption of the air conditioning system. Alternatively, the device could be used for increasing the partial pressure of carbon dioxide in an environment for applications such as greenhouses and solariums.

Electrochemical devices described herein are membrane-electrode-assemblies (MEA) with an electrolyte membrane that can be easily integrated into, for example, an indoor air conditioning system. In contrast to existing systems using absorbents which operate at high temperatures, the described systems and methods are able to remove CO₂ and water continuously from indoor air at temperatures below 70 °C.

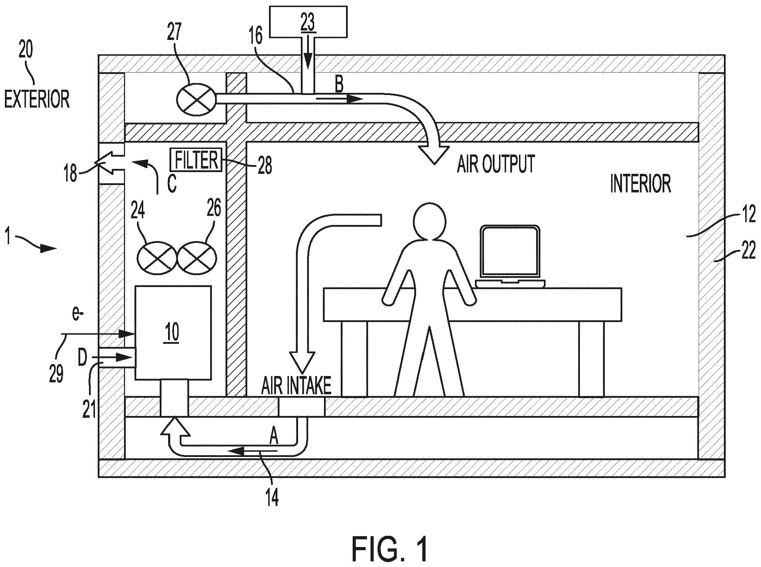

Turning to FIG. 1, a controlled environment is illustrated in which an ECWR apparatus 1 operates. The term "controlled environment" herein refers to an enclosed space such as a building or vehicle and may be contrasted with an uncontrolled environment such as the outdoors. The apparatus 1 includes an electrochemical device 10 (in this case, a single electrochemical cell), which concentrates a stream of CO₂ and water to be vented outdoors. The electrochemical device shown in FIG. 1 receives a flow A of a carbon dioxide and water-containing fluid, such as indoor air (primarily nitrogen and oxygen, with small amounts of carbon dioxide and water vapor) from a first, controlled environment 12 via an inlet conduit 14. After removal of carbon dioxide and water from the fluid, some or all of the fluid may be returned to the first environment via an outlet conduit 16. The return flow B has lower partial pressures of carbon dioxide and water than the inlet flow A. A carbon dioxide and water outlet conduit 18 carries a fluid flow C of carbon dioxide and water, e.g., carbon dioxide and water vapor mixed in air, to a second environment 20 relative to an enclosing structure 22. A flow of sweep fluid, for example, atmospheric air D is received via a conduit 21. In some embodiments, the sweep fluid may be a gas or a liquid, and the sweep fluid may contain components to absorb, dissolve, or adsorb CO₂. The partial pressures of carbon dioxide and water in the fluid flow C may be higher than in flow A and/or B. The illustrated enclosing structure 22 may be a building, or other enclosing structure having an interior space, such as a vehicle, e.g., an automobile, submarine, ship, aircraft, or spacecraft.

One or more pumps 24, 26 and/or blowers 27 help to circulate the fluid to and from the electrochemical device 10 via the conduits 14, 16, 18. A filter(s) 28 (e.g, air filter) is optionally incorporated in one or more of the conduits 14, 16 to capture volatile organic components and particulates. A temperature modulation unit 23 (e.g., heating and/or cooling and/or additional dehumidification) is coupled to the conduit 16 so that the fluid returned to the first environment 12 is at a desirable temperature for occupants. An electric current for operation of the electrochemical device 10 is supplied by a power source 29. The electrochemical cell 10 (or a stack of such cells) is configured to be installed inside an air conditioner or other HVAC unit, where in certain embodiments, the air conditioner fan is used to drive indoor air to the electrochemical device 10, thereby avoiding the need for an additional fan.

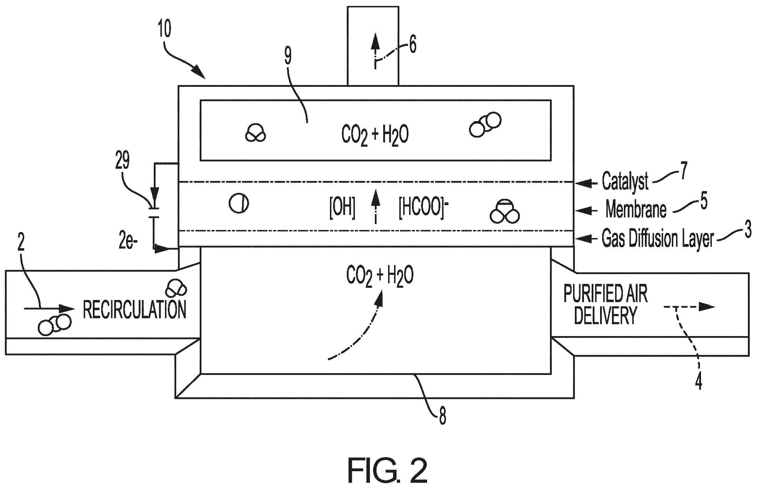

An overview of the electrochemical device 10 is provided in connection with the schematic diagram of FIG. 2. Input air 2, such as a feed gas stream, enters a cathode chamber 8 of the electrochemical device 10. The electrochemical cell 10 includes layers of electrocatalysts 3, 7, and an anion-conducting membrane 5 arranged in a planar or spiral-wound stack. A MEA comprises two catalyst gas diffusion layers 3, 7; an anion-conducting gas-impermeable membrane 5, gaskets, and bipolar plates. Multiple layers can be assembled to form a stack, which can be installed in-line with a centralized or local recirculated air duct. As indoor CO₂ and/or water vapor concentrations increase, the power source 29 applies an active potential that electrochemically reduces CO₂ present in the feed gas 2 to the formate (HCOO)⁻ and hydroxide (OH)⁻ ions. Under an external voltage (e.g., <1 V per unit cell), CO₂ and humidity from the feed gas 2 are selectively reduced to formate and hydroxide ions at the cathode 8, migrate across the membrane 5 to the anode 9, where they are reversibly oxidized and the product gases vented 6. Carbon dioxide and water are removed from the building (i.e., feed gas) in an equimolar ratio. The highly conductive membrane 5 transports the reduced ionic species to the outward-facing anode, where the formate ion is re-oxidized and CO₂ is rejected to the outside air in accordance with the reaction set forth above. In addition, the purified air 4 (i.e., air having the carbon dioxide and water vapor removed) is output from the cathode 8 and recirculated into the indoor space 12.

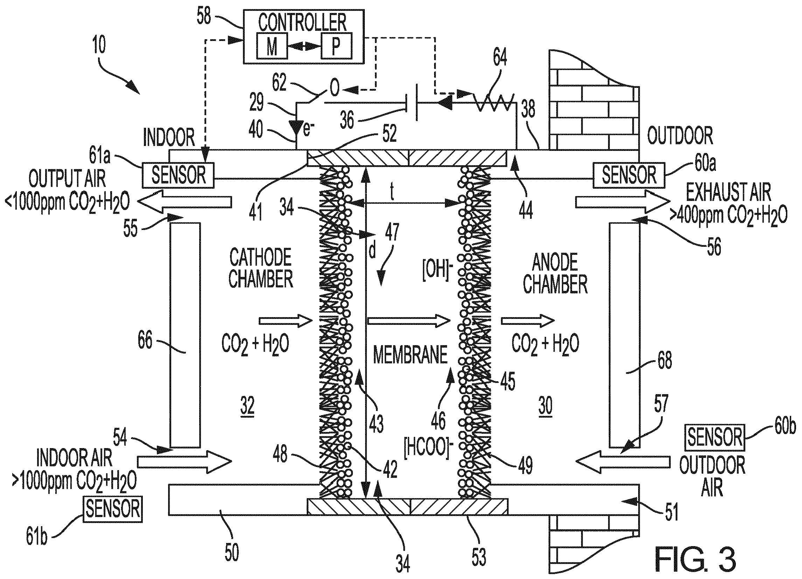

A more detailed view of certain embodiments of the electrochemical device 10 is provided in FIG. 3. The electrochemical device 10 includes an anode chamber 30 and a cathode chamber 32, which are spaced apart by a solid membrane 34, such as a poly(ionic) liquid-based membrane. A potential is maintained across the membrane 34 by an energy (e.g., voltage) source 29 that is electrically connected to an anode 38 and a cathode 40 in the anode and cathode chambers 30, 32, respectively. The cathode 40 includes a current collector 41 and first catalytic layer 42, disposed in the cathode chamber 32, adjacent to a first surface 43 of the membrane 34. The anode 38 includes a current collector 44 and a second catalytic layer 45, disposed in the anode chamber 30, adjacent an opposite, second surface 46 of the membrane. The current collectors transport electrons but do not catalyze oxidation or reduction of CO₂. The first catalytic layer 42 includes a reduction catalyst, which catalyzes the reduction of carbon dioxide and water to ionic carrier species 47 (i.e., [HCOO]⁻ and [OH]⁻). The second catalytic layer 45 includes an oxidation catalyst, which catalyzes the oxidation of the ionic carrier species 47 (after transport through the membrane 34) to carbon dioxide and water. The energy source 29, which is electrically connected with at least one of the reduction catalyst layer and the oxidation catalyst layer, provides energy for the reduction and oxidation reactions that occur therein. The membrane 34 is permeable to the ionic carrier species (anions) 47 but is gas-impermeable meaning that it is at least substantially impermeable to gases, in particular, oxygen, carbon dioxide, and water vapor. By "substantially impermeable," it is meant that no more than 25%, no more than 5%, or no more than 1% of the respective gas (e.g., oxygen) entering the cathode chamber is carried through the membrane into the anode chamber (and vice versa). Gas diffusion layers 48, 49 may be disposed adjacent one or both of the catalytic layers 42, 45, to aid in distributing the gas flow. The diffusion layers 48, 49 may be formed from a porous material, such as cloth or paper. A second pair of current collectors 50, 51 may be located at the opposite ends of the cell from collectors 40, 44. The current collectors 40, 44, 50, 51 may be formed from an electrically conductive material, such as copper or steel. The cell may include two or more gaskets 52, 53, on either end of the membrane, to inhibit gas leakage from the cell and/or between the chambers 32, 30.

An inlet 54 to the cathode chamber 32 receives an input, e.g., feed gas containing carbon dioxide, such as indoor air from an indoor space 12, via a conduit 14. The indoor air, after removal of some of the CO₂ and water, passes out of an outlet 55 of the cathode chamber 32, to be returned to the indoor space 12 via the conduit 16. The anode chamber 30 includes one or more outlets 56, through which exhaust air, containing regenerated CO₂ and water, passes into the conduit 18. An inlet 57 may optionally receive a pressurized flow of outdoor air to mix with the air in the anode chamber and carry it out of the outlet 56.

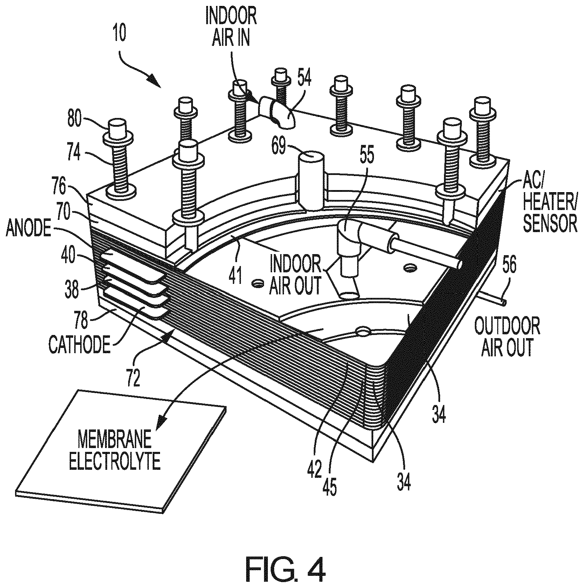

A controller 58 monitors the gaseous composition in one or more of the airflows A, B, C, D and/or chambers 30, 32, e.g., through the use of one or more gas sensors 60a-b, 61a-b. The controller 58 may include memory M storing instructions for converting signals from the sensor 60a into gas concentration measurements for one or more gases, such as CO₂ and/or water, and instructions for implementing adjustments to the rate of CO₂ and water removal when one or more of the detected gas concentrations are outside a predefined range. The controller 58 includes a hardware processor P, in communication with the memory, for executing the instructions. When the detected gas concentrations are not within one or more predetermined ranges, the controller 58 communicates with one or more components of the electrochemical device 10 that are able to effect a change in the levels, such as a switch 62 and/or rheostat 64 in the electrical circuit 36. The cell 10 may include a side wall or walls 66, 68 which space(s) the top and bottom current collectors and define the respective inlets and outlets to the cell, or may be connected with other cells to form a stack, as shown in FIG. 4.

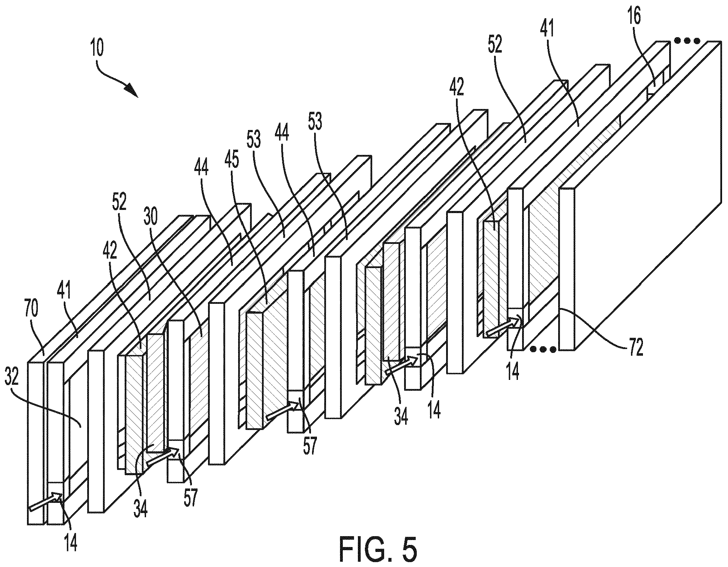

While a single-celled electrochemical device is illustrated in FIG. 3, a stack of cells may be combined to form the electrochemical device 10, as illustrated in FIGS. 4 and 5, where similar elements are accorded the same numerals. The stack may include at least two cell, or at least five cells, and in certain embodiments, about ten cells, one on top of the other, which receive air from a common inlet (manifold) 54 and deliver the output air to a common outlet or outlets (manifolds) 55, 56. An electrically-conductive member 69 conducts electrons to the current collectors 41. A similar electrically-conductive member (not shown) conducts electrons from the current collectors 44. The layers 42, 34, and 44 (and 48, 49, if used) which define the cells, may be covered by insulation layers 70, 72, which are held in position by a clamping device 74, here illustrated as including bipolar plates 76, 78 held together by threaded fixing members 80, such as bolts or screws. In some embodiment, the bipolar plates are each a composite graphite plate, such as a fluoro-carbon/graphite composite plate. In certain embodiments, one or more of the bipolar plate 76 and insulation layer 70 may be heating/cooling plate and/or include one or more sensors. Other components of the clamping device 74, such as bolts, compression springs, and gas fittings, can be made of steel, plastic, or other rigid material.

The multi-cell electrochemical device stack 10 distributes indoor air into different cells in the stack, with overall pressure and flow rates. The cells are pneumatically in parallel or in series in the stack with the flow rates of air in each cell being balanced. In FIG. 4, the first (left) cell is arranged cathode, membrane, anode, and the second, subsequent cell in the stack is reversed, in an anode, membrane, cathode arrangement, and so forth throughout the stack.

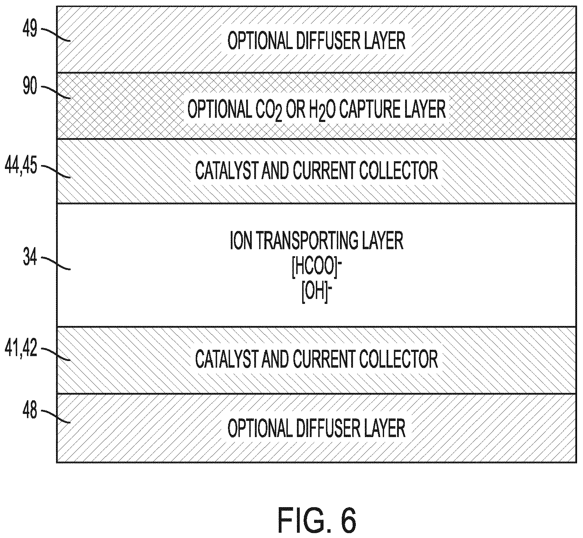

The low ambient concentration of CO₂ (e.g., about 400 ppm) can inhibit the maximum flux that can be maintained across the membrane 34. In certain embodiments, the electrochemical device 10, can optionally include a CO₂ sorbent as a CO₂ capture layer 90, on the anode side of the membrane 34, e.g., intermediate the diffuser layer 49 and catalyst layer 45, as illustrated in FIG. 6. The CO₂ capture layer 90 is positioned on the indoor side of the membrane 34, e.g., spaced from the membrane by the catalyst layer 44. The CO₂ capture layer 90 can enhance the CO₂ removal rate by elevating the CO₂ gas concentration in the vicinity of the CO₂ reduction electrode (cathode) 40. The CO₂ sorbent in the capture layer 90 may be a liquid (e.g., alkyl amine, or ionic liquid), supported by a conductive porous material (e.g., carbon cloth). Alternatively, the sorbent may be a solid polymer (e.g., a polyamine, such as poly(ethanolamine), or a polymerized ionic liquid).

As described herein, the electrochemical device 10 is a low power, compact, and lightweight device that can operate in a continuous mode for indoor CO₂ and water vapor removal that vents the removed CO₂ and water vapor outdoors. The CO₂ and water from air captured in the cathode side of the electrochemical device, separated by the membrane, is released outdoors through the anode side continuously. As will be appreciated, some of the oxygen from the indoor air may also be reduced, in the process of removing CO₂ and water. However, this is a relatively small proportion of the oxygen in the indoor space. For example, about 250 ppm of oxygen may be removed, out of a typical atmospheric content of 210,000 ppm.

The catalytic layers 42, 45 each include one or more catalysts, which may be the same or different. Suitable catalysts for CO₂ and water reduction and/or oxidation of the ionic carrier species to form CO₂ and water include electrocatalysts having high monodispersity (e.g., having a unimodal particle size distribution and/or having particle size distribution with full width at half maximum below 100% of the center of the distribution, e.g., 10 ± 5 nm or 100 ± 50 nm), controlled crystal strain (defined as an average crystal strain of -8 to +8% relative to an unstrained catalyst surface), preferred crystallographic faceting (e.g., <110> or <111> crystal orientation of a catalyst such as In₂O₃ or (211) on Pb or (112) on Sn) that have significantly lower activation energy for CO₂ reduction to a formate species, and/or controlled degree of oxidation that varies between a pure metal state and a fully oxidized state corresponding to a Bader charge of -1 |e| to -1.16 |e|. Examples include electrocatalysts comprising at least one of a metal, an alloy, and an oxide. The at least one metal, alloy, and oxide comprises at least one noble metal, such as indium (In), platinum (Pt), palladium (Pd), silver (Ag), gold (Au), and copper (Cu), and/or other metal catalysts, such as bismuth (Bi), lead (Pb), and tin (Sn). In some embodiments, the catalyst in layer 42 is highly selective for conversion of carbon dioxide to the ionic carrier species. As an example, for formate ion generation, the catalyst layer may include at least one of Cu, In, Sn, and Pb. The catalyst in one or both of layers 42, 45 can be supported on a support material, such as carbon black, which can have a high surface area to reduce the catalyst loading. The CO₂ and water reduction catalyst may have a faradaic efficiency of at least 70% with j_{limiting}=0.2 mA cm⁻² measured using a disc electrode.

The activation overpotential associated with the carbon dioxide reduction is a challenge in reducing the electrochemical device's operating voltage (e.g., < 1 V). The kinetics of the reduction reaction are affected by (i) low concentration of indoor CO₂ (e.g., < 2,500 ppm), (ii) lower activity of commercial CO₂ reduction catalysts, and (iii) high H₂O:CO₂ ratio in hydrated membranes. Ionic liquids are used as capture solvents and one of the approaches to increase the local CO₂ concentration relies on local buildup on account of CO₂ sorption. Nanostructured monodisperse catalysts are known to have a higher activity on account of exposure of high-energy edges compared to bulk materials. Partial oxidation or increased crystal strain is reported to increase catalyst activity. Density functional theory (DFT) studies suggest that the (110) indium surface and the presence of an oxide are both necessary to prevent the formation of CO as a product. Thus, the co-adsorption of water and CO₂ is predicted to result in a surface COOH species on In₂O₃ with an activation barrier of only 0.42 V (0.84 eV). In certain embodiments, monodisperse Sn or In nanocrystals having diameters of about 10 nm are used as electrocatalysts in one or both of the catalyst layers.

Excellent three-phase contact within the membrane electrode assembly is an important factor in achieving the desired improvement in the contaminant removal flux. This corresponds to an increase in the system current density (e.g., about 3→7 >50 mA cm-2). The use of heat-pressing substantially reduces the charge-transfer resistance by sustaining and maintaining contact between the catalysts and membrane. The addition of high-surface area carbon black reduces or prevents nanoparticle aggregation. Ionomer dispersions containing carbon and nanoparticles provide homogenous distribution within the gas diffusion electrode. Volatile pore-forming agents (i.e., porogens) such as o-dichlorobenzene can be mixed with the ionomer dispersions. When evaporated, the porogens lead to the formation of a thin porous skin providing high, catalytically active surface area. Strategies for improving performance include heat-pressing, including an ionomer binding agent in the catalyst ink, varying the catalyst and carbon loading, and use of pore-forming agents to improve MEA contact. The maximum current density of 3 mA cm⁻² (1 hour) was achieved as shown below in Table 1. Typical operating voltage for an indoor embodiment is about 1.25-1.8 V, corresponding to a specific energy consumption of 260-360 kJ mol⁻¹.

The above strategies are applied to ion-selective and substantially gas-impermeable membrane(s) 34 of the electrochemical device 10. In certain embodiments, the membrane is non-aqueous. The term non-aqueous when used with respect to the membrane refers to a water content of no more than 10 wt. %. The membrane(s) may include a solidified liquid electrolyte, such as a poly(ionic) liquid (PIL), or may be an ionic liquid supported on a support material, such as an electrically conductive cloth, e.g., carbon-containing cloth, or other electrically-conductive porous material. Ionic liquids are compounds containing organic cations and anions, which may be liquid at ambient temperatures (about 10-40 °C.). PILs typically melt at a temperature of below 100 °C. Suitable PILs for use herein are those in which, under operating temperatures, the cation is immobilized in the form of a polymer, while the anion is free to move through the membrane. Poly(ionic) liquid membranes can be formed by direct synthesis, e.g., by polymerization of ionic liquids, or by functionalization of an existing ion exchange membrane with an electrolyte containing suitable anions. In certain embodiments, the membrane 34 is predominantly poly(ionic) liquid, i.e., at least 51 wt. % or at least 70 wt. %, or at least 90 wt. % poly(ionic) liquid, or up to 100 wt. % poly(ionic) liquid.

Examples of membrane non-aqueous electrolytes include: an ionic liquid comprising cations selected from a group comprising 1,3-dimethylimidazolium, 1,3-diethylimidazolium, 1-ethyl-3-methylimidazolium, 1,2-dimethyl-3-propylimidazolium, 1,3-dipropylimidazolium, 1-ethyl-3-propylimidazolium, 1,2-dimethyl-3-N-butylimidazolium, 1-ethyl-3-butylimidazolium, 1-methyl-3-octylimidazolium, 1-ethyl-3-octylimidazolium, 1-n-propyl-3-methylimidazolium, 1-n-propyl-3-ethylimidazolium, 1-butyl-3-methylimidazolium, 1-butyl-3-ethylimidazolium, 1-butyl-2,3-dimethylimidazolium, 1-butyl-2,3-diethylimidazolium, 1-hexyl-3-methylimidazolium, 1-hexyl-3-ethylimidazolium, 1-octyl-3-methylimidazolium, and 1-octyl-3-ethylimidazolium, 1-vinylimidazolium, 1 -propynylimidazolium, 1 -vinyl-3-ethenylimidazolium, 1-ethenyl-3-propynylimidazolium, 1,3-dipropynylimidazolium, 2-methyl-1-vinylimidazolium; 1-(2-methoxyethyl)-1-methylpyridinium, N-(3-hydroxypropyl)pyridinium, N-hexylpyridinium, 1-ethenyl-3-propenylpyridinium, 2-vinylpyridinium, 4-vinylpyridinium, 1-butyl-1-methylpyrrolidinium, N-butyl-N-methylpyrrolidinium, 1-hexyl-1-methylpyrrolidinium, 1-ethenyl-3-propenylpyrrolidinium, trimethylbutylammonium, N-ethyl-N,N-dimethyl-2-methoxyethylammonium, tetrabutylammonium, n-hexyltriethylammonium, trimethyl-n-hexylammonium, triethylbutylammonium, trihexyl (tetradecyl)phosphonium and tris(n-hexyl) tetradecyiphosphonium, formate, oxalate, hydroxide, sulfonates, acetates, phosphates, carboxylates, borates, imide anions, amide anions, halides, sulfates, and mixtures thereof. In addition, the membrane may include a non-aqueous solvent comprising at least one of ethanol, iso-propanol, ethylene glycol, glycerol, tetrahydrofuran, and ethylene carbonate, where the solvent contains dissolved formate and hydroxide compounds.

Thin uniform membranes 34 can be made with a thickness t of, for example, 5-500 µm, e.g., at least 20 µm, such as up to 200 µm, or up to 100 µm, e.g., of the order of 50 µm thickness. The membrane 34 may have a diameter d (or largest dimension) of at least 0.5 cm, such as up to 50 cm, depending on the application. The membrane may be flexible, allowing it to return to its original shape after a deflection.

In certain embodiments, the membrane 34 includes an aprotic, optionally polymerized, ionic liquid. Particularly suitable ionic liquids have a wide electrochemical window (>3.5 to 7 V), low vapor pressure (Pᵥₐₚ less than 100 Pa at 298 K), high ionic conductivity (0.1 to 100 mS/cm), and low melting point, all of which are desirable properties for gas-based electrochemical applications.

In contrast to current HVAC systems that maintain indoor air quality by constantly diluting unwanted gases, in certain embodiments the electrochemical separation system selectively removes the unwanted gas (CO₂ and water vapor) from building air while capturing solid particulates with commercially available air filters. In a CO₂-scrubbed building, commercially available air filters can remove solid particulates, which dramatically reduces the minimum ventilation rate. The presence of volatile organic compounds (VOCs), such as formaldehyde and ammonia, may still determine the lower limit of a building's ventilation needs. Formaldehyde is a common VOC for which accurate test methods and emission standards have been established. One approach to preventing VOC buildup is the simple permeation through polymer membranes. Assuming a typical membrane thickness (50 µm), permeability (2,500 Barrer), typical air rate (5 L s⁻¹ m⁻²), and formaldehyde concentration (171 µg/m³), the ventilation rate can be reduced by over 90% compared to the CO₂ benchmark, while still maintaining formaldehyde concentration at OSHA permissible limits (i.e., 0.75 ppm).

Further embodiments include treating a portion of the MEA, such as the membrane, with an additive to provide additional air filtering. For example, when used to condition indoor air, the membrane can be treated with a biocide additive introduced to the membrane electrolyte. Example additives include an ionic liquid with antimicrobial properties or a quaternary ammonium compound, silver or other metal nanoparticles, physical nanostructures that inhibit the adhesion of biological agents, and electrolyte comprising a sodium or potassium azide additive, and an electrolyte comprising a peroxide, hypochlorite, and/or perchlorite additive compound. Such biocide additives can provide additional levels of scrubbing the indoor air for biological contaminants such as bacteria, fungus, and mold. In certain embodiments, the membrane or a component of the MEA may be intrinsically biocidal without the use of additives.

Most HVAC applications require a lifetime in excess of ten years. Factors affecting the electrochemical device's lifetime include (i) progressive loss of catalyst activity due to catalyst contamination, (ii) loss of membrane conductivity on account of electrolyte loss, and (iii) increased gas crossover due to microscopic tears within the membrane. Changes in the ionic and polarization area-specific resistances and gas permeability over 250 hours are used to evaluate the effects of these modes. The projected system lifetime is estimated assuming 8% resistance loss, 8 hours of operation, and 250 working days. Using these conservative assumptions, a performance loss of 1% corresponds to a projected lifetime of ten years.

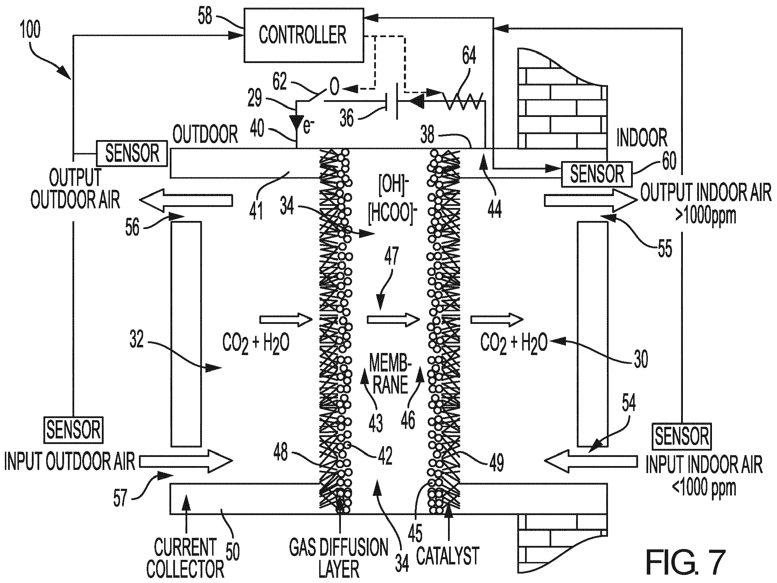

With reference to FIG. 7, an alternative embodiment directed to an electrochemical device 100 configured to raise the partial pressure of carbon dioxide and water in an indoor atmosphere, such as in a greenhouse, is shown. The electrochemical device 100 can be similarly configured to that described above, except as noted. In these embodiments, the electrochemical device 100 is orientated with the anode chamber 30 receiving the indoor air through an inlet 54 connected to the air intake 14. After increasing the partial pressure of carbon dioxide, the indoor air is returned to the indoor environment via an outlet 55. The cathode chamber 32 receives outdoor air, containing at least a low level of carbon dioxide and water, via an inlet 57. Carbon dioxide from the outdoor air is reduced, by the catalyst layer 42, to transportable ions 46, which are transported across the membrane 34, before being reconverted to carbon dioxide by the catalyst layer 45. In this way, the system may be used to concentrate CO₂ and water in indoor air to provide higher concentrations for use in environments such as greenhouses. When the electrochemical device is used to concentrate carbon dioxide and water in an environment, the output gas (gas vented to the exterior) can have a partial pressure of carbon dioxide in a range of 0.0004-1 bar and a partial pressure of water in a range of 0.0005-1 bar. Methods for increasing and decreasing carbon dioxide and water vapor in a gaseous environment using an electrochemical device are similar and described further below.

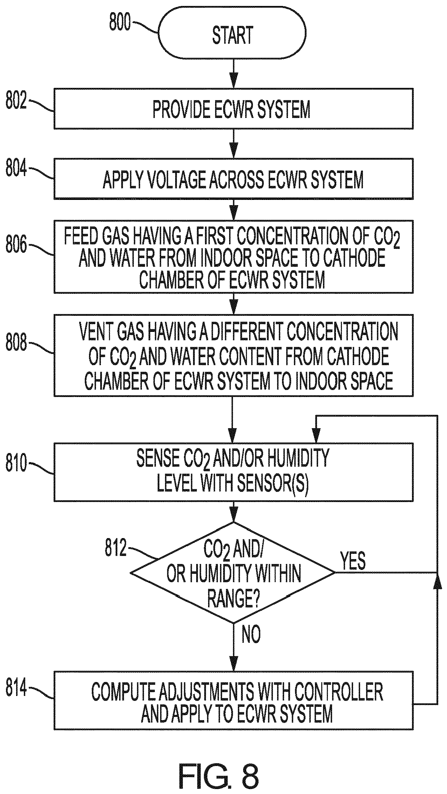

In FIG. 8, embodiments directed to removing CO₂ and water from environments are shown. The process begins at 800. At 802, an ion-selective, gas-impermeable membrane-based electrochemical device (e.g., an electrolyzer) is provided. At 804, a voltage is applied across the electrochemical device cell. Increasing the voltage increases the reaction kinetics and the rate at which carbon dioxide and water vapor are removed from the input gas. At 806, an input gas having first concentrations of carbon dioxide and water is fed to a cathode chamber. The electrochemical device electrochemically reduces CO₂ and water in the input air to ionic carrier species (e.g., formate and hydroxide ions), which are ionically transported through the gas-impermeable membrane and oxidized back to CO₂ and water. The CO₂ and water generated at the anode are vented in a gas having concentrations of CO₂ and water differing from those of the input gas 808. For example, the partial pressure of CO₂ in the vented gas can be in the range of 0.0004-1 bar and the relative humidity can be in a range of 30 to 100%.

Optionally, at various time intervals, CO₂ and/or water concentrations may be sensed at various locations 810 (e.g., input and/or output of the electrochemical device, input/output to the exterior atmosphere) with one or more CO₂ and/or humidity sensors. If the CO₂ and/or humidity levels are beyond a predetermined threshold or range 812, a controller adjusts the system and/or electrochemical device to adjust the output concentrations 814. Example, adjustments may include increasing or decreasing the voltage applied to the electrochemical device, increasing or decreasing the flow rate of the input gas, increasing or decreasing the amount or flow rate of the gas being vented, and increasing or decreasing the amount or flow rate of the external air being input to the system. Otherwise, the method returns to the monitoring stage 810. The process can proceed in this way until adjustments are no longer needed, such as when a building is not occupied by people, or maintained in continuous operation. Control of ventilation rate and CO₂/H₂O removal rate can also be performed on the basis of sensing another contaminant such as formaldehyde, other VOCs, or particulates.

As will be appreciated, the method of increasing the concentration of carbon dioxide in an interior space may be similar to that described above. However, air from the interior space is fed to the anode chamber inlet at 806, while a high CO₂ and water atmosphere is fed to the cathode chamber inlet. The interior air, with a higher level of CO₂ and water, is then vented from the anode chamber to the interior space via the anode chamber outlet 808. However, carbon dioxide and water are still electrochemically reduced to ionic carrier species in the cathode chamber, the ionic carrier species are ionically transported through the membrane, and the ionic carrier species are electrochemically oxidized to form carbon dioxide and water in the anode chamber.

In other embodiments, the electrochemical device may be used as an electrochemical CO₂ and water sensor for regulating HVAC systems in indoor environments. A perturbation in one or both of the ambient CO₂ and water concentrations results in a measurable change in the electrochemical cell potential. This senses the presence of CO₂ and/or water emitters, such as for sensing occupants, and for regulating HVAC loads for buildings. The CO₂ and water gas concentrations on a reference electrode (baseline) are maintained at a constant value. A standard reference electrode may be used as well (silver, silver|silver chloride, Ferrocene|Ferrocenium).

The selective separation of gases under an applied potential as describe herein could be extended to other separation processes such as CO₂ removal from natural gas or removal could generate an output sweep liquid instead of a gas. A preliminary economic analysis of the system costs based on reported cost models for proton exchange membrane (PEM) fuel cells was developed. The baseline system is modeled as a 25-cell stack with a footprint of 1,000 cm². The membrane electrode assembly does not contain any platinum group metal catalysts, and the cost of material, labor, and tooling is factored into the stack components. As discussed above, the stack components include an MEA, gaskets, bipolar plates, end plates, and assembly hardware. The balance of plant components include replaceable air filters, power supplies, control modules, thermocouples, humidity and CO₂ sensors, device housing, and plumbing hardware. The installed costs are reported in units of installed building area and correspond to approximately $130 per person based on an average occupant density of 86 m⁻² per person. The sensitivity of system cost to market adoption was also assessed (1-50%), and the initial modeling indicates an uninstalled price of $1.50-$2.00 m⁻² (per unit building area).

When operated at a cell voltage of 1 V, the electrochemical cell stack is expected to deliver a combined removal flux (CO₂+H₂O) greater than 16 ml m⁻² h⁻¹, and is capable of eliminating the carbon dioxide and water vapor produced by a single individual during normal activity (e.g., 20 liters per hour each). The stack energy consumption is expected to be 48 W per person corresponding to a specific energy consumption of only 200 kJ mol⁻¹ (CO₂+H₂O) removed. When the energy savings potential is assessed across all the commercial buildings in the U.S. based on building use and population statistics, the outdoor air ventilation rate and latent cooling and heating loads can be reduced by 75%. The corresponding energy savings potential could be >0.50 quads and as high as 0.76 quads if operated at the lower voltage limit of 0.8V.

### EXAMPLES

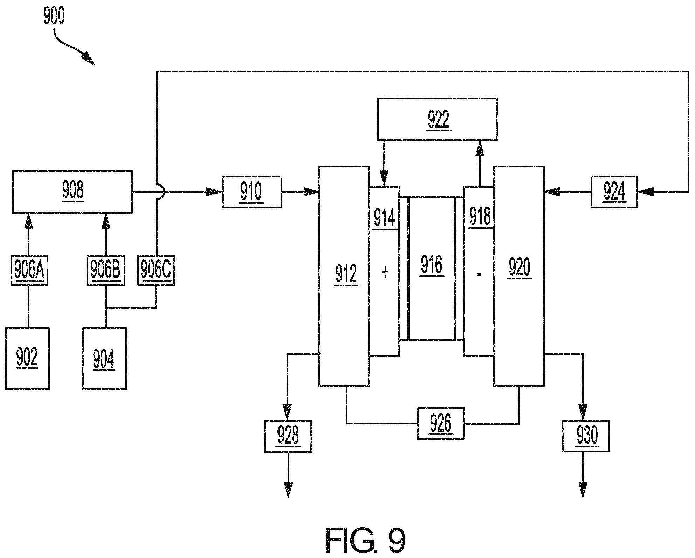

Two prototype electrochemical devices were fabricated as shown schematically in FIG. 9. The two prototypes differed in the size of the catalytically active geometric surface area. The first electrochemical CO₂ pump prototype used a 1.3 cm² membrane and was scaled up to a 25 cm² area cell, which is referred to herein as the modular unit cell. The unit cell membrane electrode assembly included a high surface area indium catalyst and a formate and hydroxide transporting ion. The benchtop testing setup is shown schematically in FIG. 9.

An indoor gaseous environment is replicated using a CO₂ tank 902 and a N₂ tank 904. Other gases may be used to replicate other gaseous environments. Relative amounts of the respective gases are controlled with respective valves 906a-c. Valves 906a-b output a combination of carbon dioxide and nitrogen to an intake manifold 908 for feeding to a membrane assembly inlet 912. Prior to entering the membrane assembly, the feed gas acquires water in humidifier 910.

As described for the electrochemical cells above, the inlet 912 leads to a membrane 916 sandwiched between two electrocatalyst layers 914, 918. The electrocatalyst (anode) layer is coupled to an exhaust 920. Both the inlet 912 and the exhaust 920 are coupled to a heater 926 configured to heat the cell in a range of 0-50 °C, and the electrocatalyst layers are coupled to an energy source 922 (e.g., a potentiostat configured to apply a range of 0-10V). A hydrogen sensor 928 is coupled to an outlet of inlet 912 to evaluate any parasitic reactions affecting the output (e.g., air that would be returned to an indoor environment) prior to venting that air from the test system. At the exhaust, a carbon dioxide sensor 930 is coupled to the output to determine the increased concentration of carbon dioxide (e.g., in a range of 0-3,0000 ppm) in the vented gas (e.g., gas vented to the exterior atmosphere in the above discussions). Additional components may include a second humidifier 924, dew point sensors, humidity control and measurement features, thermocouples, and carbon dioxide sensors to evaluate the effect of climatic conditions on the cell performance.

The prototype electrochemical cell was tested over a range of concentrations of CO₂ in the inlet feed gas spanning 0.1-100% and including both measurements. The achieved operations are summarized below in Table 1 along with target ranges.

**Table 1: Target range and achieved operation using an embodiment of the ECWR system**

| Metric | Range | Demonstrated |
|---|---|---|
| Membrane ASR (Ω-cm²) | 0.5-50 | 31 |
| Kinetic Overpotential (V) | 0.05-1.5 | 1 |
| Faradaic Efficiency (%) | 80-99+ | 88 |
| Energy Consumption (kJ mol⁻¹) | 5-400 | 260-360 |
| Current Density (mA cm⁻²) | 0.1-500 | 3 |
| Removal Efficiency (%)* | 10-99+ | 58 |
| *Using 2,500 ppm CO₂ feed | | |
| Continuous Operation (h) | 0.1-10+ | 1 |

As can be seen, the electrochemical device demonstrates extensive CO₂ removal (1,500→150 ppm CO₂), modest specific energy consumption (260-360 kJ mol⁻¹), and low gas permeability (55 Barrer) during operation in ambient air. The energy consumption is reported using electricity as the energy basis; a fuel to electricity conversion factor of 33% is used to compare HVAC and sorbent technologies.

As mentioned above, the prototype electrochemical cell was used to evaluate gas permeability. The gas permeability was measured by setting the CO₂ concentration (1.9-7.6%) at the indoor, feed side to a constant value and measuring the CO₂ crossover on the exhaust side using a CO₂ sensor (i.e., Vaisala GMP-252, 0-3,000 ppm). The exhaust gas flow rate was maintained at 100 mL N₂/min for all test runs. The formate-conducting ionic membranes were prepared by equilibrating commercial membranes in the ionic liquid. The results are compiled in Table 2 below.

**Table 2: Permeability testing using functionalized gas-impermeable anion-selective membrane**

| Membrane | Inlet CO₂ (kPa) | Outlet CO₂ (ppm) | CO₂ Crossover Rate (mmol/m²/hour) | CO₂ Permeability (cm²/s) |
|---|---|---|---|---|
| FAA-3-50 | 1.9 | 4.6 | 12.4 | 0.01 |
| | 3.8 | 33 | 89 | |
| | 5.7 | 61 | 162 | |
| | 7.6 | 83 | 223 | |
| FAS-30 | 1.9 | 15 | 40 | 0.04 |
| | 3.8 | 52 | 139 | |
| | 5.7 | 89 | 239 | |
| | 7.6 | 123 | 331 | |

The lowest CO₂ permeability was recorded in a cell using a formate-functionalized FAA-3-50 membrane (0.0104 cm²/s), and was projected to have a vanishingly small permeability at expected indoor CO₂ concentrations.

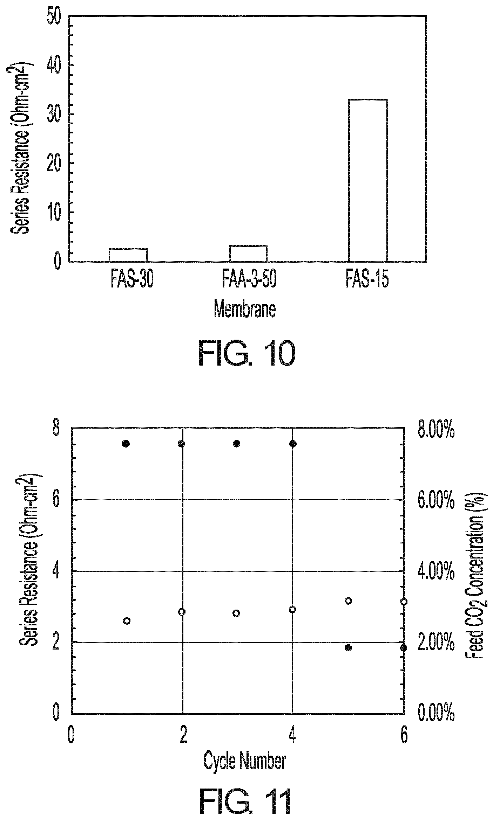

The prototype electrochemical cell was further used to evaluate cell impedance. The effect of different commercial membranes on the electrochemical cell impedance was determined using electrochemical impedance spectroscopy. Three different formate-ion functionalized anion-exchange membranes were tested (FAS-15, FAS-30, and FAA-3-50). The compositions of the respective FAS and FAA membranes are known in the art as is that the last number of the respective names indicated the thickness of the membrane (e.g., FAS-15 is 15 microns thick). The respective area-specific series resistances (ASR) of the various membranes are shown in FIG. 10. While the FAS-15 membrane (the thinnest of the three) was quite resistive, the other two (FAS-30 and FAA-3-50) had a satisfactory cell impedance (i.e., <10 ohm-cm²).

FIG. 11 illustrates the effect of cycling and varying inlet CO₂ concentrations on the ASR of the electrochemical cell using a FAA-3-50 membrane ion-exchanged with 2M formic acid. Extended operation was tested over the course of seventeen separate experiments in which the cell potential (0.25-1.5V) and CO₂ concentrations (1.9-7.6%) were varied among them. The ionic conductivity only increased from the initial value of 2.63 ohm-cm² to 3.15 ohm-cm² over six experiments and forty-eight hours of exposure to CO₂. As can be seen, the ionic cell resistance (shown with hollow dots) is demonstrably unaffected by changes in feed concentration (shown with solid dots) and repeated testing.

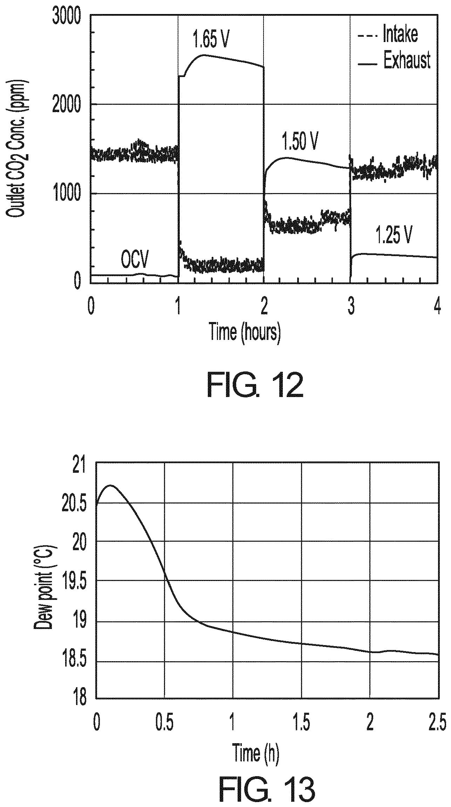

FIGS. 12 and 13 indicate the overall effectiveness of the proposed electrochemical cell using results from the prototype assembly. They indicate the change in CO₂ concentration (FIG. 12) coupled with the change in humidity in the feed stream (FIG. 13). In FIG. 12, the solid lines indicate the CO₂ concentrations in the air exhausted to the outdoors for each hour at a different applied potential (e.g., from hour 1-2, the applied potential was 1.65 V). The dashed lines represent the corresponding CO₂ concentrations of the gas returned to the indoor environment after passing through the electrochemical cell during those respective time intervals. The input feed gas was kept at 22 °C and 1,500 ppm CO₂. With an applied voltage of at least 1.50 V, carbon dioxide is separated from the feed gas and removed from the system. At the same time, the electrochemical cell decreases the dew point (i.e., humidity) of the feed gas as shown in FIG. 13.

The electrochemical reaction utilized by the electrochemical device (CO₂ + H₂O + 2e⁻ ↔ [HCOO]⁻ + [OH]⁻) mimics the product stoichiometry of aerobic cellular respiration (1/6 C₆H₁₂O₆ + O₂ → CO₂ + H₂O). This makes the devices described herein well-suited for occupant-generated contaminant (CO₂ and H₂O) removal. The specific energy consumption can be reduced (360 → 200 kJ mol⁻¹ (CO₂ + H₂O)), which is nearly 25% lower than current approaches when comparing with CO₂ as the sole species being eliminated. The system components are air-stable and the CO₂ reduction kinetics are enhanced in the presence of oxygen on account of catalyst oxidation. Thus, the described electrochemical selective separation devices provide targeted removal of indoor humidity and carbon dioxide while significantly reducing energy consumption.

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein. The use of numerical ranges by endpoints includes all numbers within that range (e.g. 1 to 5 includes 1, 1.5, 2, 2.75, 3, 3.80, 4, and 5) and any range within that range.

## Claims

1. An electrochemical device, comprising:
a first electrode chamber including an inlet which receives an input fluid from a first environment comprising first concentrations of carbon dioxide and water and an outlet configured to deliver a first output fluid comprising second concentrations of carbon dioxide and water to the first environment, the second concentrations being lower than the first concentrations;
a reduction catalyst layer in the first electrode chamber which reduces carbon dioxide and water in the input fluid to form ionic carrier species;
a second electrode chamber with an outlet configured to deliver a second output fluid comprising third concentrations of carbon dioxide and water to a second environment;
an ion-transporting membrane positioned between the second electrode chamber and the first electrode chamber, the membrane comprising carrier species; and
an oxidation catalyst layer in the second electrode chamber which oxidizes the ionic carrier species to form carbon dioxide and water.

2. The device of claim 1, wherein the membrane is a non-aqueous membrane.

3. The device of claim 2, wherein the membrane is treated with a non-aqueous electrolyte comprising:
an ionic liquid comprising cations selected from a group comprising 1,3-dimethylimidazolium, 1,3-diethylimidazolium, 1-ethyl-3-methylimidazolium, 1,2-dimethyl-3-propylimidazolium, 1,3-dipropylimidazolium, 1-ethyl-3-propylimidazolium, 1,2-dimethyl-3-N-butylimidazolium, 1-ethyl-3-butylimidazolium, 1-methyl-3-octylimidazolium, 1-ethyl-3-octylimidazolium, 1-n-propyl-3-methylimidazolium, 1-n-propyl-3-ethylimidazolium, 1-butyl-3-methylimidazolium, 1-butyl-3-ethylimidazolium, 1-butyl-2,3-dimethylimidazolium, 1-butyl-2,3-diethylimidazolium, 1-hexyl-3-methylimidazolium, 1-hexyl-3-ethylimidazolium, 1-octyl-3-methylimidazolium, and 1-octyl-3-ethylimidazolium, 1-vinylimidazolium, 1 - propynylimidazolium, 1 -vinyl-3-ethenylimidazolium, 1-ethenyl-3-propynylimidazolium, 1,3-dipropynylimidazolium, 2-methyl-1-vinylimidazolium; 1-(2-methoxyethyl)-1-methylpyridinium, N-(3-hydroxypropyl)pyridinium, N-hexylpyridinium, 1-ethenyl-3-propenylpyridinium, 2-vinylpyridinium, 4-vinylpyridinium, 1-butyl-1-methylpyrrolidinium, N-butyl-N-methylpyrrolidinium, 1-hexyl-1-methylpyrrolidinium, 1-ethenyl-3-propenylpyrrolidinium, trimethylbutylammonium, N-ethyl-N,N-dimethyl-2-methoxyethylammonium, tetrabutylammonium, n-hexyltriethylammonium, trimethyl-n-hexylammonium, triethylbutylammonium, trihexyl (tetradecyl)phosphonium and tris(n-hexyl) tetradecyiphosphonium, formate, oxalate, hydroxide, sulfonates, acetates, phosphates, carboxylates, borates, imide anions, amide anions, halides, sulfates, and mixtures thereof; or a non-aqueous solvent comprising at least one of ethanol, iso-propanol, ethylene glycol, glycerol, tetrahydrofuran, and ethylene carbonate, the solvent containing dissolved formate and hydroxide compounds.

4. The device of claim 1, wherein at least one of the reduction catalyst layer and the oxidation catalyst layer comprises electrocatalysts comprising at least one of a metal, an alloy, and an oxide, the at least one metal, alloy, and oxide comprising at least one of In, Sn, Bi, Pb, Cu Ag, Au, Pt, and Pd.

5. The device of claim 1, wherein the membrane is substantially impermeable to gas.

6. The device of claim 1, wherein the device comprises components or additives with biocidal properties.

7. The device of claim 6, wherein the biocide additive is located in the membrane and comprises at least one of an ionic liquid with antimicrobial properties, an ionic liquid with a quaternary ammonium compound, and an electrolyte comprising at least one of a sodium azide additive, a potassium azide additive, a peroxide additive compound, a hypochlorite additive compound, and a perchlorite additive compound.

8. The device of claim 1, wherein the device is integrated in an HVAC system for a controlled environment.

9. A device to control levels of carbon dioxide and water in a controlled environment, comprising:
a first electrode chamber including an inlet which receives an input fluid comprising first concentrations of carbon dioxide and water and an outlet configured to deliver a first output fluid comprising second concentrations of carbon dioxide and water to a first environment, the second concentrations being lower than the first concentrations;
a reduction catalyst layer in the first electrode chamber which reduces carbon dioxide and water in the input fluid to form ionic carrier species;
a second electrode chamber having an outlet configured to deliver a second output fluid comprising third concentrations of carbon dioxide and water to a second environment;
an ion-transporting membrane positioned between the second electrode chamber and the first electrode chamber, the membrane comprising carrier species; and
an oxidation catalyst layer in the second electrode chamber which oxidizes the ionic carrier species to form carbon dioxide and water.

10. The device of claim 9, wherein the first environment is a controlled environment.

11. The device of claim 9, wherein the second environment is a controlled environment.

12. The device of claim 9, further comprising at least one of means for controlling fluid flow through the device and a temperature control unit configured to modulate the temperature of fluid delivered to the controlled environment.

13. The device of claim 9, wherein at least one of the reduction catalyst layer and the oxidation catalyst layer comprises electrocatalysts having controlled size, strain, oxidation, crystal orientation, or preferred crystallographic faceting.

14. The device of claim 9, wherein the membrane is a non-aqueous membrane.

15. The device of claim 9, wherein the membrane has a thickness of 5-1,000 microns.

16. The device of claim 9, wherein the membrane is biocidal or comprises a biocidal additive.

17. A method for controlling carbon dioxide and water concentrations in a controlled environment, comprising:
providing an electrochemical device comprising:
a first electrode chamber including an inlet which receives an input fluid comprising first concentrations of carbon dioxide and water and an outlet configured to deliver a first output fluid comprising second concentrations of carbon dioxide and water, the second concentrations being lower than the first concentrations;
a reduction catalyst layer in the first electrode chamber configured to reduce carbon dioxide and water in the input fluid to form ionic carrier species;
a second electrode chamber with an outlet configured to deliver a second output fluid comprising third concentrations of carbon dioxide and water;
an ion-transporting membrane positioned between the second electrode chamber and the first electrode chamber, the membrane comprising carrier species;
an oxidation catalyst layer in the second electrode chamber configured to oxidize the ionic carrier species to form carbon dioxide and water; and
an energy source electrically connected with at least one of the reduction catalyst layer and the oxidation catalyst layer;
electrochemically reducing carbon dioxide and water to ionic carrier species in the first electrode chamber;
ionically transporting the ionic carrier species through the membrane;
electrochemically oxidizing the ionic carrier species to carbon dioxide and water in the second electrode chamber; and
directing one of the first output fluid and the second output fluid into the controlled environment.

18. The method of claim 17, wherein a partial pressure of carbon dioxide is in a range of 0.0004-1 bar and water is in a range of 30-100% relative humidity in the first output fluid and the first output fluid is directed to the controlled environment.

19. The method of claim 17, wherein a partial pressure of carbon dioxide is in a range of 0.0004-1 bar and a partial pressure of water is in a range of 0.0005-1 bar in the second output fluid and the second output fluid is directed to the controlled environment.
